# EUROPEAN PATENT APPLICATION

(11) **EP 4 679 881 A1**
(43) Date of publication of application: **14.01.2026**
(21) Application number: 23925686.0
(22) Date of filing: 03.03.2023
(51) Int. Cl.: H04W 24/00

(54) **SERVICE PREDICTION METHOD AND DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2023/079695
(87) International publication number: WO 2024/182960

(57) **Abstract**

The present disclosure relates to the technical field of communications, and relates to a service prediction method and device, and a storage medium, for use in improving system efficiency and reducing ineffective scheduling. The method comprises: receiving prediction information, the prediction information including at least one of first prediction information and second prediction information, wherein the first prediction information is used for indicating a channel state of a terminal at a first moment, and the second prediction information is determined on the basis of service characteristics of the terminal.

## Description

### TECHNICAL FIELD

The present disclosure relates to the technical field of communication, and in particular, to a service prediction method and apparatus, and a storage medium.

### BACKGROUND

In recent years, artificial intelligence (AI) technology has achieved continuous breakthroughs in numerous fields. The continued development of fields like intelligent voice and computer vision has not only brought a rich variety of applications to smart terminals, but has also found widespread application in education, transportation, home living, healthcare, retail, security, and other fields. This has brought convenience to people's lives while also promoting industrial upgrades across various industries. AI technology is also rapidly interpenetrating with other disciplines, integrating knowledge from diverse disciplines while also providing new directions and methods for their development.

In related art, a research project on AI technology in the radio access network (RAN) has been established to introduce artificial intelligence technology into the wireless air interface to assist in improving wireless air interface transmission technology. Furthermore, the application of AI technology in the wireless air interface for communication processing, including AI model training and model inference applications, is currently supported.

### SUMMARY

To overcome the problems existing in the related art, the present disclosure provides a service prediction method and apparatus, and a storage medium.

According to a first aspect of the embodiments of the present disclosure, a service prediction method is provided, which is performed by a wireless access network device. The method includes:
receiving prediction information, where the prediction information includes at least one of first prediction information and second prediction information; where the first prediction information is used to indicate a channel state of a terminal at a first moment, and the second prediction information is determined based on a service characteristic of the terminal.

In one embodiment, receiving the prediction information includes:
receiving the first prediction information and/or the second prediction information sent by the terminal.

In one embodiment, receiving the prediction information includes:
receiving the second prediction information sent by a core network device.

In one embodiment, receiving the prediction information includes:
receiving the second prediction information sent by the core network device; and
receiving the first prediction information sent by the terminal.

In one embodiment, before receiving the first prediction information sent by the terminal, the method further includes:
determining the first moment based on the second prediction information; and
sending indication information to the terminal, where the indication information is used to indicate the terminal to predict the channel state at the first moment.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one embodiment, the first moment includes at least one of the following: the service generation time, the second moment, the third moment, and the fourth moment.

In one embodiment, the first prediction information is determined by the terminal through prediction based on an AI model; and/or
the second prediction information is determined by the terminal or a core network device through prediction based on an AI model.

In one embodiment, the method further includes:
reserving a resource for the terminal based on the first prediction information and/or the second prediction information.

According to a second aspect of the embodiments of the present disclosure, a service prediction method is provided, which is performed by a terminal. The method includes:
determining prediction information, where the prediction information includes at least one of first prediction information and second prediction information; where the first prediction information is used to indicate a channel state of the terminal at a first moment, and the second prediction information is determined based on a service characteristic of the terminal; and
sending the prediction information to a radio access network device.

In one embodiment, determining the second prediction information includes:
receiving indication information sent by the radio access network device, where the indication information is used to indicate the terminal to predict the channel state at the first moment; and
determining the second prediction information based on the indication information.

In one embodiment, the method further includes:
determining the second prediction information, where the second prediction information is determined based on the service characteristic of the terminal;
sending the second prediction information to the wireless access network device.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one implementation, the first moment includes at least one of the following: the service generation time, the second moment, the third moment, and the fourth moment.

In one embodiment, an AI model is deployed in the terminal, and the first prediction information and the second prediction information are determined through prediction based on the AI model.

According to a third aspect of the embodiments of the present disclosure, a service prediction method is provided, which is performed by a core network device. The method includes:
determining second prediction information, where the second prediction information is determined based on a service characteristic of a terminal; and
sending the second prediction information to a radio access network device.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one embodiment, an AI model is deployed in the core network device, and the second prediction information is determined through prediction based on the AI model.

According to a fourth aspect of the embodiments of the present disclosure, a service prediction apparatus is provided, and the apparatus includes:
a receiving module, configured to receive prediction information, where the prediction information includes at least one of first prediction information and second prediction information; where the first prediction information is used to indicate a channel state of a terminal at a first moment, and the second prediction information is determined based on a service characteristic of the terminal.

In one embodiment, the receiving module is configured to receive the first prediction information and/or the second prediction information sent by the terminal.

In one embodiment, the receiving module is configured to receive the second prediction information sent by a core network device.

In one embodiment, the receiving module is configured to receive the second prediction information sent by the core network device; and
receive the first prediction information sent by the terminal.

In one embodiment, the processing module is configured to determine the first moment based on the second prediction information; and
the sending module is configured to send indication information to the terminal, where the indication information is used to indicate the terminal to predict the channel state at the first moment.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one implementation, the first moment includes at least one of the following: the service generation time, the second moment, the third moment, and the fourth moment.

In one embodiment, the first prediction information is determined by the terminal through prediction based on an AI model; and/or
the second prediction information is determined by the terminal or a core network device through prediction based on an AI model.

In one embodiment, the processing module is configured to reserve a resource for the terminal based on the first prediction information and/or the second prediction information.

According to a fifth aspect of the embodiments of the present disclosure, a service prediction apparatus is provided, and the apparatus includes:
a processing module, configured to determine prediction information, where the prediction information includes at least one of first prediction information and second prediction information; where the first prediction information is used to indicate a channel state of a terminal at a first moment, and the second prediction information is determined based on a service characteristic of the terminal; and
a sending module, configured to send the prediction information to a radio access network device.

In one embodiment, the receiving module is configured to receive indication information sent by the radio access network device, where the indication information is used to indicate the terminal to predict the channel state at the first moment; and
a processing module is configured to determine the second prediction information based on the indication information.

In one embodiment, the processing module is configured to determine the second prediction information, where the second prediction information is determined based on the service characteristic of the terminal; and
the sending module is configured to send the second prediction information to the radio access network device.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one implementation, the first moment includes at least one of the following: the service generation time, the second moment, the third moment, and the fourth moment.

In one embodiment, an AI model is deployed in the terminal, and the first prediction information and the second prediction information are determined through prediction based on the AI model.

According to a sixth aspect of the embodiments of the present disclosure, a service prediction apparatus is provided, and the apparatus includes:
a processing module, configured to determine second prediction information, where the second prediction information is determined based on a service characteristic of a terminal; and
a sending module, configured to send the second prediction information to a radio access network device.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one embodiment, an AI model is deployed in the core network device, and the second prediction information is determined through prediction based on the AI model.

According to a seventh aspect of the embodiments of the present disclosure, a service prediction apparatus is provided, including: a processor; and a memory for storing processor-executable instructions; where the processor is configured to perform the method described in the above-mentioned first aspect or any one of the embodiments of the first aspect.

According to an eighth aspect of the embodiments of the present disclosure, a service prediction apparatus is provided, including: a processor; and a memory for storing processor-executable instructions; where the processor is configured to perform the method described in the above second aspect or any one of the embodiments of the second aspect.

According to a ninth aspect of the embodiments of the present disclosure, a service prediction apparatus is provided, including: a processor; and a memory for storing processor-executable instructions; where the processor is configured to perform the method described in the third aspect or any one of the embodiments of the third aspect.

According to a tenth aspect of the embodiments of the present disclosure, a storage medium is provided, in which instructions are stored. The instructions in the storage medium, when executed by a processor of a radio access network device, enables the wireless access network device to execute the method described in the first aspect or any one of the embodiments of the first aspect.

According to an eleventh aspect of the embodiments of the present disclosure, a storage medium is provided, in which instructions are stored. The instructions in the storage medium, when executed by a processor of a terminal, enables the terminal to execute the method described in the second aspect or any one of the embodiments of the second aspect.

According to a twelfth aspect of the embodiments of the present disclosure, a storage medium is provided, in which instructions are stored. The instructions in the storage medium, when executed by a processor of a core network device, enables the core network device to execute the method described in the third aspect or any one of the embodiments of the third aspect.

The technical solutions provided by the embodiments of the present disclosure may include the following beneficial effects. The radio access network device receives first prediction information and/or second prediction information, where the first prediction information is used to indicate the channel state of the terminal at the first moment, and the second prediction information is determined based on the service characteristic of the terminal. Thus, the radio access network device can determine the channel state of the terminal at the first moment based on the first prediction information, determine the service characteristic of the terminal based on the second prediction information, and further reserve resources for the terminal or perform related scheduling in advance based on the channel state and the service characteristic, thereby improving system efficiency and reducing invalid scheduling.

It is to be understood that the foregoing general description and the following detailed description are exemplary and explanatory only, and do not limit the present disclosure.

### BRIEF DESCRIPTION OF THE DRAWINGS

The accompanying drawings herein, which are incorporated in and constitute a part of the specification, illustrate embodiments consistent with the present disclosure and are used in conjunction with the specification to explain principles of the present disclosure.
FIG. 1 is a schematic diagram of a wireless communication system shown according to an exemplary embodiment.
FIG. 2 is a flow chart of a service prediction method shown according to an exemplary embodiment.
FIG. 3 is a flow chart of a service prediction method shown according to an exemplary embodiment.
FIG. 4 is a flow chart of a service prediction method shown according to an exemplary embodiment.
FIG. 5 is a flow chart of a service prediction method shown according to an exemplary embodiment.
FIG. 6 is a flow chart of a service prediction method shown according to an exemplary embodiment.
FIG. 7 is a flow chart of a service prediction method shown according to an exemplary embodiment.
FIG. 8 is a flow chart of a service prediction method shown according to an exemplary embodiment.
FIG. 9 is a flow chart of a service prediction method shown according to an exemplary embodiment.
FIG. 10 is a flow chart of a service prediction method shown according to an exemplary embodiment.
FIG. 11 is a flow chart of a service prediction method shown according to an exemplary embodiment.
FIG. 12 is a flow chart of a service prediction method shown according to an exemplary embodiment.
FIG. 13 is a block diagram of a service prediction apparatus shown according to an exemplary embodiment.
FIG. 14 is a block diagram of a service prediction apparatus shown according to an exemplary embodiment.
FIG. 15 is a block diagram of a service prediction apparatus shown according to an exemplary embodiment.
FIG. 16 is a block diagram of an apparatus for service prediction shown according to an exemplary embodiment.
FIG. 17 is a block diagram of an apparatus for service prediction shown according to an exemplary embodiment.

### DETAILED DESCRIPTION

Exemplary embodiments are described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure.

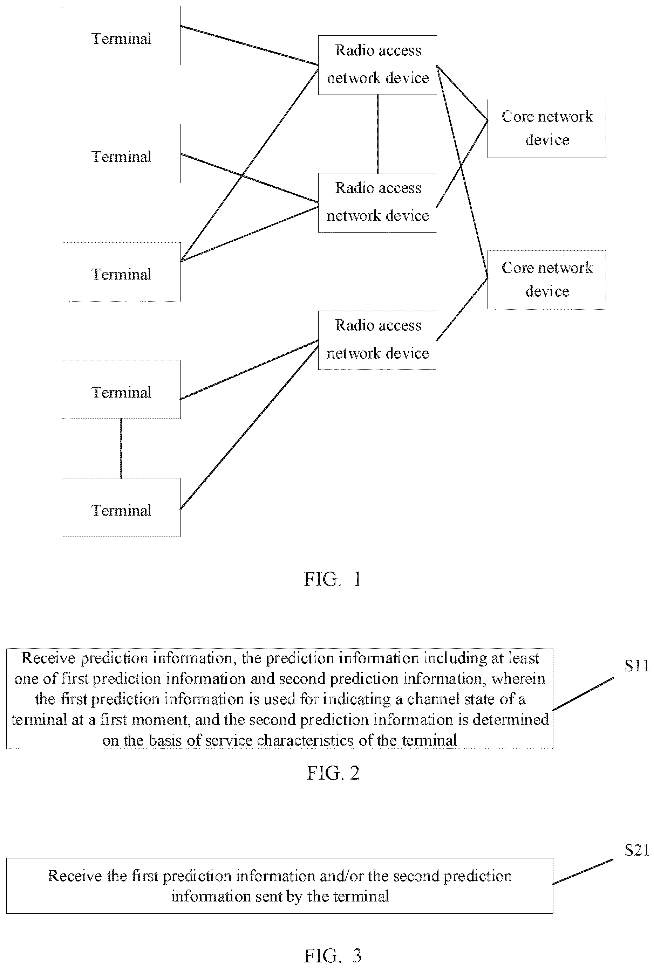

The service prediction method described in the present disclosure may be applied to the wireless communication system shown in FIG. 1. The wireless communication system may include a radio access network device, a terminal, and a core network device. It may be understood that the wireless communication system shown in FIG. 1 is merely illustrative, and the wireless communication system may further include other network devices, such as wireless relay devices and wireless backhaul devices, which are not shown in FIG. 1. The embodiments of the present disclosure do not limit the number of device entities included in the wireless communication system.

It can be further understood that the wireless communication system in the embodiments of the present disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. According to capacities, speeds, delays and other factors of different networks, the networks may be divided into a 2nd generation (2G) network, a 3rd generation (3G) network, a 4th generation (4G) network, or a future evolved network, such as a 5th generation (5G) wireless communication system network, and the 5G network may also be referred to as new radio (NR). For convenience of description, the wireless communication network may be referred to as network for short sometimes in the present disclosure.

Furthermore, the radio access network device involved in the present disclosure may be a base station, an evolved Node B (eNB), a home base station, an access point (AP) in a wireless fidelity (WIFI) system, a wireless relay node, a wireless backhaul node, a transmission point (TP), a transmission and receiving point (TRP), or the like. It may also be a gNB in an NR system, or a component or a part of devices that constitutes a base station. When it is a Vehicle to Everything (V2X) communication system, the network device may also be an on-board unit. It should be understood that, in the embodiments of the present disclosure, the specific technologies and specific device forms adopted for the wireless access network device are not limited.

Further, the terminal involved in the disclosure may also be referred to as a terminal device, a user equipment (UE), a mobile station (MS), a mobile terminal (MT), etc., which is a device that provides voice and/or data connectivity for a user. For instance, the terminal may be a handheld device, a vehicle-mounted device, etc., with a wireless connection function. At present, some instances of the terminal include a mobile phone, a pocket personal computer (PPC), a palm computer, a personal digital assistant (PDA), a laptop computer, a tablet computer, a wearable device, and a vehicle-mounted device. In addition, in a case of a vehicle-to-everything (V2X) communication system, the terminal device may be a vehicle-mounted device. It should be understood that in the embodiments of the present disclosure, specific technologies and specific device forms used for the terminal are not limited.

Furthermore, the core network devices involved in the present disclosure may include a mobile management entity (MME) and a serving gateway (S-GW) in LTE, a corresponding service general packet radio service support node (SGSN) and a gateway general packet radio service support node (GGSN) in 3G, and a next generation core (NG-Core) in 5G, as well as a sensing function entity in the present disclosure, or the like. It should be understood that, in the embodiments of the present disclosure, the specific technologies and specific device forms adopted for the core network device are not limited.

In the embodiments of the present disclosure, any feasible wireless communication technology may be adopted among a radio access network device, a terminal, and a core network device to implement mutual data transmission. The transmission channel over which the radio access network device sends data or control information to the terminal is referred to as a downlink channel (DL), and the transmission channel over which the terminal sends data or control information to the radio access network device is referred to as an uplink channel (UL). It is understood that the radio access network device involved in the embodiments of the present disclosure may be a base station. Of course, the radio access network device may also be any other possible wireless access network device, the terminal may be any possible terminal, and the core network device may be any possible core network device, and the present disclosure is not limited thereto.

In recent years, artificial intelligence (AI) technology has achieved continuous breakthroughs in numerous fields. The continued development of fields like intelligent voice and computer vision has not only brought a rich variety of applications to smart terminals, but has also found widespread application in education, transportation, home living, healthcare, retail, security, and other fields. This has brought convenience to people's lives while also promoting industrial upgrades across various industries. AI technology is also rapidly interpenetrating with other disciplines, integrating knowledge from diverse disciplines while also providing new directions and methods for their development.

In related art, a research project on AI technology in the radio access network (RAN) has been established to introduce artificial intelligence technology into the wireless air interface to assist in improving wireless air interface transmission technology. Furthermore, the application of AI technology in the wireless air interface for communication processing, including AI model training and model inference applications, is currently supported.

Currently, in actual services, such as voice, web pages, videos, etc., the service generation time or service arrival time thereof often exhibits a certain temporal correlation. The service volume generated at the service generation time also has a strong temporal correlation. However, in related art, the utilization of the temporal correlation characteristics of services is relatively limited.

With the development of AI technology, the embodiments of the present disclosure consider using AI technology to predict service characteristics and channel state. The radio access network device performs relevant scheduling and configuration in advance based on the prediction results to reduce invalid scheduling.

FIG. 2 is a flow chart of a service prediction method shown according to an exemplary embodiment. As shown in FIG. 2, the service prediction method is performed by a radio access network device and includes the following steps.

In step S11, prediction information is received, where the prediction information includes at least one of first prediction information and second prediction information, where the first prediction information is used to indicate a channel state of a terminal at a first moment, and the second prediction information is determined based on a service characteristic of the terminal.

It should be noted that the first moment refers to a future moment relative to the current moment. For example, if the current moment is 11:20, the first moment may be any moment after 11:20. The channel state of the terminal at the first moment indicated by the first prediction information refers to a predicted channel state of the terminal at the first moment, rather than an actual channel state of the terminal at the first moment. It should be understood that the actual channel state of the terminal at the first moment may be the same as or different from the channel state of the terminal at the first moment indicated by the first prediction information. Similarly, the second prediction information determined based on the service characteristic of the terminal likewise refers to the second prediction information that is determined by predicting the service characteristic of the terminal. The content indicated by the second prediction information may be the same as or different from the actual service characteristic.

In some embodiments, the prediction information is determined through prediction based on an AI model. The AI model is a pre-trained model of which training set may be different types of services and their corresponding historical service generation times, service generation volumes, and the like. Therefore, in the actual application process, a service type may be used as an input to the AI model, and information such as the service generation time and the service generation volume corresponding to the service type may be output. For example, if the service type is voice, information such as the service generation time and the service generation volume of the voice service may be predicted based on the AI model.

In some embodiments, the prediction information received by the radio access network device may be the first prediction information and the second prediction information sent by the terminal; or the prediction information received by the radio access network device may be the second prediction information sent by the core network device; or the prediction information received by the radio access network device may be the first prediction information sent by the terminal and the second prediction information sent by the core network device.

For example, when the prediction information received by the wireless access network device is sent by the terminal, the prediction information is determined by the terminal through prediction based on the AI model; when the prediction information received by the radio access network device is sent by the core network device, the prediction information is determined by the core network device through prediction based on the AI model; when the prediction information received by the wireless access network device is sent by the terminal and the core network device, the prediction information is determined by the core network device and the terminal through prediction based on the AI model respectively.

In some embodiments, after the radio access network device receives the second prediction information sent by the core network device, the radio access network device may determine the first moment based on the second prediction information and notify the terminal to predict the channel state at the first moment.

In some embodiments, the second prediction information is determined based on the service characteristic of the terminal, and the service characteristics may be the service generation time, the service generation volume, and the like.

In one embodiment, the second prediction information may include service generation time, such as a time when a service may be generated. In another embodiment, the second prediction information may include a service generation volume corresponding to the service generation time, such as a time when a service may be generated and a service volume that may be generated. In another embodiment, the second prediction information may include a probability of service generation at a certain moment, for example, a probability of service generation at a certain moment. In another embodiment, the second prediction information may include a moment at which a service generation probability is greater than a first threshold, for example, a predicted moment at which a service is generated and a probability of the service being generated. In another embodiment, the second prediction information may include a moment at which a service generation volume is greater than a second threshold. In another embodiment, the second prediction information may include a target parameter determined based on a service characteristic of a terminal.

In some embodiments, the second prediction information may include service generation time. The service generation time is the time when a service may be generated, which is predicted by the AI model, rather than the time when a service is actually generated. Similarly, all items included in the second prediction information are predicted by the AI model, rather than the service generation time or the service generation volume of the terminal in a real situation.

In one embodiment, the target parameter includes at least one of the following: monitoring time for a physical downlink control channel (PDCCH); a resource allocated for a physical downlink shared channel (PDSCH); and one or more monitoring time in discontinuous reception (DRX).

In some embodiments, the first prediction information indicates the channel state of the terminal at the first moment, and the first moment may be the moment when the service is generated, for example, the first moment may be the service generation time, the second moment, the third moment or the fourth moment.

In some embodiments, the first prediction information is determined by the terminal or the core network device through prediction based on the AI model; and/or the second prediction information is determined by the terminal through prediction based on the AI model.

In some embodiments, the radio access network device may reserve resources for the terminal based on the first prediction information and/or the second prediction information, or perform corresponding scheduling in advance, etc.

It should be understood that in this embodiment, the radio access network device may be a base station, or, of course, may be other network element devices that function as a base station.

In the embodiments of the present disclosure, the radio access network device receives the first prediction information and/or the second prediction information, where the first prediction information is used to indicate the channel state of the terminal at the first moment, and the second prediction information is determined based on the service characteristic of the terminal. Thus, the radio access network device can determine the channel state of the terminal at the first moment based on the first prediction information, determine the service characteristic of the terminal based on the second prediction information, and further reserve resources for the terminal or perform related scheduling in advance based on the channel state and the service characteristic, thereby improving system efficiency and reducing invalid scheduling.

FIG. 3 is a flow chart of a service prediction method shown according to an exemplary embodiment. As shown in FIG. 3, the service prediction method is performed by a radio access network device and includes the following steps.

In step S21, the first prediction information and/or the second prediction information sent by the terminal is received.

The first prediction information is used to indicate the channel state of the terminal at the first moment, and the second prediction information is determined based on the service characteristic of the terminal.

In some embodiments, the radio access network device may receive the first prediction information and the second prediction information sent by the terminal, or may receive only the first prediction information or only the second prediction information sent by the terminal.

In some embodiments, an AI model is deployed on the terminal side, and the first prediction information and/or the second prediction information is determined by the terminal based on the prediction from the AI model.

In the embodiment of the present disclosure, the radio access network device receives the first prediction information and/or the second prediction information sent by the terminal, determines the channel state of the terminal at the first moment based on the first prediction information, determines the service characteristic of the terminal based on the second prediction information, and further reserves resources for the terminal or performs related scheduling in advance based on the channel state and the service characteristic, thereby improving system efficiency and reducing invalid scheduling.

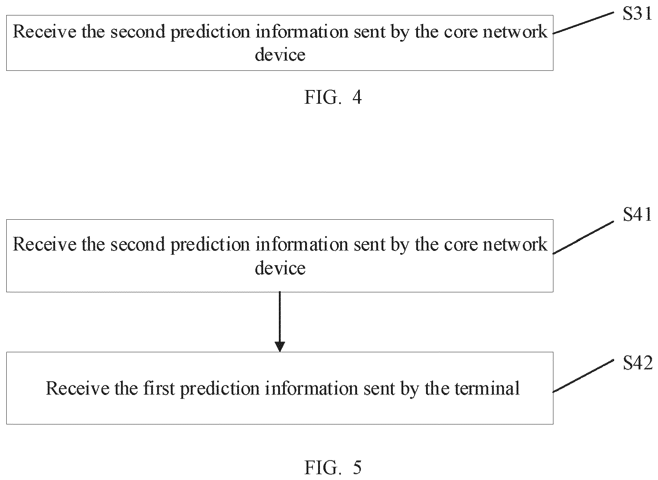

FIG. 4 is a flow chart of a service prediction method shown according to an exemplary embodiment. As shown in FIG. 4, the service prediction method is performed by a radio access network device and includes the following steps.

In step S31, the second prediction information sent by the core network device is received.

The second prediction information is determined based on the service characteristic of the terminal.

In some embodiments, an AI model is deployed on the core network device side, and the second prediction information is determined by the core network device based on the prediction from the AI model.

In an embodiment of the present disclosure, the radio access network device receives second prediction information sent by the core network device, determines the service characteristic of the terminal based on the second prediction information, and further reserves resources for the terminal or performs related scheduling in advance based on the service characteristic of the terminal, thereby improving system efficiency and reducing invalid scheduling.

FIG. 5 is a flow chart of a service prediction method shown according to an exemplary embodiment. As shown in FIG. 5, the service prediction method is performed by a radio access network device and includes the following steps.

In step S41, the second prediction information sent by the core network device is received.

In step S42, the first prediction information sent by the terminal is received.

The first prediction information is used to indicate the channel state of the terminal at the first moment, and the second prediction information is determined based on the service characteristic of the terminal.

In some embodiments, AI models are deployed in the core network device and the terminal, the second prediction information is determined by the core network device based on the prediction from the AI model, and the first prediction information is determined by the terminal based on the prediction from the AI model.

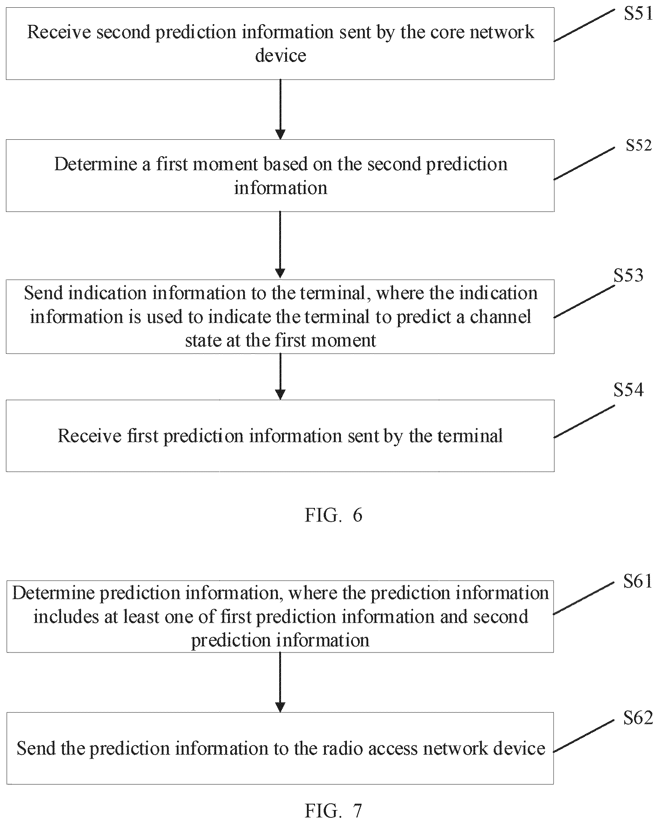

In some embodiments, before receiving the first prediction information sent by the terminal, the radio access network device needs to determine the first moment based on the second prediction information, send indication information to the terminal, and the terminal determines the first prediction information based on the indication information. As shown in FIG. 6, FIG. 6 is a flow chart showing a service prediction method, including the following steps.

In step S51, second prediction information sent by the core network device is received.

In step S52, a first moment is determined based on the second prediction information.

In step S53, indication information is sent to the terminal, where the indication information is used to indicate the terminal to predict a channel state at the first moment.

In step S54, first prediction information sent by the terminal is received.

In the embodiment of the present disclosure, the radio access network device receives the second prediction information sent by the core network device and the first prediction information sent by the terminal, determines the service characteristic of the terminal based on the second prediction information, and determines the channel state of the terminal at the first moment based on the first prediction information, thereby reserving resources for the terminal or performing related scheduling in advance based on the service characteristics and channel state of the terminal, so that the system efficiency is improved and invalid scheduling is reduced.

In a service prediction method provided by an embodiment of the present disclosure, the second prediction information includes at least one of the following:
service generation time;
service generation volume;
service generation probability at a second moment;
a third moment at which the service generation probability is greater than a first threshold;
a fourth moment at which the service generation volume is greater than a second threshold; and
a target parameter.

In some embodiments, the second prediction information may include the service generation time. After the radio access network device receives the second prediction information, it can reserve transmission resources for the service generation time based on the second prediction information, and instruct the terminal through control information to schedule corresponding transmission resources to transmit the service at the service generation time.

For example, if the services will be generated at moments T1, T2, and T3, the second prediction information is T1, T2, and T3. The radio access network device reserves a first transmission resource for T1, a second transmission resource for T2, and a third transmission resource for T3, and instructs the terminal through control information to schedule the first transmission resource to transmit the service at moment T1, the second transmission resource to transmit the service at moment T2, and the third transmission resource to transmit the service at moment T3.

In some embodiments, the second prediction information may include the service generation time and service generation volume. For example, if services are to be generated at moments T1, T2, and T3, and the service generation volumes are V1, V2, and V3, respectively, the second prediction information indicates that the service generation volume at moment T1 is V1, the service generation volume at moment T2 is V2, and the service generation volume at moment T3 is V3.

In one embodiment, after the radio access network device receives the second prediction information, the radio access network device reserves, based on the second prediction information, transmission resources for the terminal at the corresponding service generation time based on the service generation volume. For example, the radio access network device allocates the most transmission resources for the service generation time with the largest service generation volume, and allocates the least transmission resources for the service generation time with the smallest service generation volume. Furthermore, the terminal is instructed via control information to schedule corresponding transmission resources to transmit the service at the service generation time.

In some embodiments, the second prediction information may include a probability of the service generation at the second moment. For example, if the predicted probability of the service generation at moment t1 is 20 %, the probability of the service generation at moment t2 is 30 %, and the probability of the service generation at moment t3 is 90 %, then the second prediction information indicates that the probability of the service generation at moment t1 is 20 %, the probability of the service generation at moment t2 is 30 %, and the probability of the service generation at moment t3 is 90 %.

In one embodiment, after receiving the second prediction information, the radio access network device obtains the service generation probability at the second moment based on the second prediction information. The radio access network device may then reserve more transmission resources for the second moment with the highest service generation probability, and reserve the least transmission resources for the second moment with the lowest service generation probability. Alternatively, the radio access network device preferentially configures scheduling information for the second moment with the highest service generation probability. For example, if the terminal has a higher service generation probability at moment T1, the radio access network device preferentially instructs the terminal, through control information, to schedule corresponding transmission resources for service transmission at moment T1.

In some embodiments, the second prediction information may include a third moment at which the service generation probability exceeds the first threshold. For example, if the probabilities of service generation at t1, t2, and t3 are 5%, 90%, and 75%, respectively, the second prediction information may include only the moment at which the probability exceeds 80%, for example, the second prediction information may only include t2.

In one embodiment, after the radio access network device receives the second prediction information, it obtains a third moment at which the service generation probability is greater than a first threshold, based on the second prediction information, and then the radio access network device may reserve transmission resources for the third moment. Alternatively, the radio access network device preferentially configures scheduling information for the second moment. For example, if the service generation probability of the terminal at moment T2 is greater than the first threshold, the radio access network device instructs the terminal, through control information, to schedule corresponding transmission resources to transmit the service at moment T2. In some embodiments, the second prediction information may include a fourth moment at which the service generation volume is greater than a second threshold. For example, the service generation volumes at t1, t2, and t3 are 1, 5, and 2, respectively. In this case, the second prediction information may only include the moments where the service generation volume exceeds 3%, e.g., the second prediction information may only include t2.

In one embodiment, after a radio access network device receives the second prediction information, it obtains a fourth moment at which the service generation volume is greater than a second threshold based on the second prediction information. The radio access network device may then reserve transmission resources for the fourth moment. Alternatively, the radio access network device preferentially configures scheduling information for the fourth moment. For example, if the terminal's service generation volume at moment T2 is greater than the second threshold, the radio access network device instructs the terminal, via control information, to schedule corresponding transmission resources at moment T2 to transmit the service.

In some embodiments, the second prediction information may include target parameters, where the target parameters are some parameters determined based on service characteristics of the terminal.

Of course, the second prediction information not only includes the information involved in the above exemplary embodiments, but may also include other information obtained by predicting service characteristics, which is not limited in the embodiments of the present disclosure.

In a service prediction method provided by an embodiment of the present disclosure, the target parameter includes at least one of the following:
monitoring time for a physical downlink control channel (PDCCH);
a resource allocated for a physical downlink shared channel (PDSCH); and
one or more monitoring time in discontinuous reception (DRX).

In some embodiments, the monitoring time of the PDCCH and/or the resource allocated for the PDSCH are determined based on the service generation volume. In one embodiment, the greater the service generation volume, the longer the monitoring time of the PDCCH and the more resources allocated for the PDSCH.

In some embodiments, one or more monitoring time under DRX are determined based on the service generation time. In one embodiment, each service generation time corresponds to one monitoring time under DRX, so that the terminal can monitor whether there is service generation during the monitoring time under DRX, thereby improving monitoring efficiency.

Of course, the target parameters do not only include the parameters involved in the above exemplary embodiments, but may also include other parameters that can be determined based on the service characteristics of the terminal, which is not limited in the embodiments of the present disclosure.

In a service prediction method provided by an embodiment of the present disclosure, the first prediction information indicates that the channel state of the terminal at the first moment includes at least one of the following: the service generation time, the second moment, the third moment, and the fourth moment.

For example, if the second prediction information indicates that the service generation time is t1, then the terminal predicts the channel state at moment t1. In another example, if the second prediction information indicates the probability of service generation at a second moment, then the terminal predicts the channel state at the second moment. In yet another example, if the second prediction information indicates a third moment when the service generation probability is greater than a first threshold, then the terminal predicts the channel state at the third moment.

In the embodiment of the present disclosure, the radio access network device may receive target parameters, thereby determining parameter information such as the monitoring time of the PDCCH and the resources to be allocated for the PDSCH in advance, and then performing relevant scheduling in advance, so that the system efficiency is improved and ineffective scheduling is reduced.

In a service prediction method provided by an embodiment of the present disclosure, the first prediction information is determined by the terminal based on the prediction from the AI model; and/or the second prediction information is determined by the terminal or the core network device based on the prediction from the AI model.

In one embodiment, if the first prediction information and the second prediction information received by the radio access network device are sent by the terminal, the first prediction information and the second prediction information are determined by the terminal based on an AI model. In another embodiment, if the first prediction information received by the radio access network device is sent by the terminal device, and the second prediction information is sent by the core network device, the first prediction information is determined by the terminal based on the AI model, and the second prediction information is determined by the core network device based on the AI model. In another embodiment, if the radio access network device only receives the second prediction information sent by the core network device, the second prediction information is determined by the core network device based on the AI model.

Based on the same concept, the present disclosure also provides a service prediction method applied to a terminal.

FIG. 7 is a flow chart a service prediction method shown according to an exemplary embodiment. As shown in FIG. 7, the service prediction method is performed by a terminal and includes the following steps.

In step S61, prediction information is determined, where the prediction information includes at least one of first prediction information and second prediction information.

The first prediction information is used to indicate the channel state of the terminal at the first moment, and the second prediction information is determined based on the service characteristics of the terminal.

It should be noted that the first moment refers to a future moment relative to the current moment. For example, if the current moment is 11:20, the first moment may be any moment after 11:20. The channel state of the terminal at the first moment indicated by the first prediction information refers to a predicted channel state of the terminal at the first moment, rather than an actual channel state of the terminal at the first moment. It should be understood that the actual channel state of the terminal at the first moment may be the same as or different from the channel state of the terminal at the first moment indicated by the first prediction information. Similarly, the second prediction information determined based on the service characteristic of the terminal likewise refers to the second prediction information that is determined by predicting the service characteristic of the terminal. The content indicated by the second prediction information may be the same as or different from the actual service characteristic.

In some embodiments, the prediction information is determined based on prediction from an AI model. The AI model is a pre-trained model of which training set may be different types of services and their corresponding historical service generation times, service generation volumes, and the like. Therefore, in the actual application process, a service type may be used as an input to the AI model, and information such as the service generation time and the service generation volume corresponding to the service type may be output. For example, if the service type is voice, information such as the service generation time and the service generation volume of the voice service may be predicted based on the AI model.

In some embodiments, the terminal may determine the second prediction information based on the indication information sent by the radio access network device.

In step S62, the prediction information is sent to the radio access network device.

In some embodiments, the second prediction information includes at least one of the following: service generation time; service generation volume; service generation probability at the second moment; a third moment at which the service generation probability is greater than the first threshold; a fourth moment at which the service generation volume is greater than the second threshold; and a target parameter.

In some embodiments, the second prediction information may include the time at which the service is generated. The service generation time is the time when the service may be generated, as predicted by the AI model, rather than the actual time when the service is generated. Similarly, all the items included in the second prediction information are predicted by an AI model, and are not the service generation time or service generation volume from the terminal under real conditions.

In some embodiments, the target parameter includes at least one of the following: monitoring time of a PDCCH; a resource allocated for a PDSCH; one or more monitoring time under DRX.

In some embodiments, the first moment includes at least one of the following: the service generation time, the second moment, the third moment, and the fourth moment.

In an embodiment of the present disclosure, the terminal may determine the channel state at the first moment and inform the radio access network device, so that the radio access network device can reserve resources for the terminal or perform related scheduling in advance based on the channel state, thereby improving system efficiency and reducing ineffective scheduling.

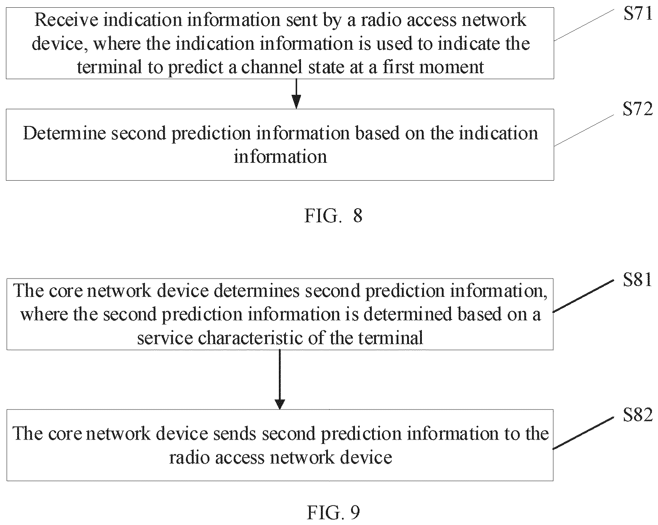

FIG. 8 is a flow chart of a service prediction method shown according to an exemplary embodiment. As shown in FIG. 8, the service prediction method is performed by a terminal and includes the following steps.

In step S71, indication information sent by a radio access network device is received, where the indication information is used to indicate the terminal to predict a channel state at a first moment;

In step S72, second prediction information is determined based on the indication information.

In the embodiments of the present disclosure, after receiving the first prediction information sent by the core network device, the radio access network device sends the indication information to the terminal, and the terminal determines the second prediction information based on the indication information.

In a service prediction method provided by an embodiment of the present disclosure, the second prediction information includes at least one of the following:
service generation time;
service generation volume;
service generation probability at a second moment;
a third moment at which the service generation probability is greater than a first threshold;
a fourth moment at which the service generation volume is greater than a second threshold; and
a target parameter.

In some embodiments, the second prediction information may include the service generation time. After the radio access network device receives the second prediction information, it can reserve transmission resources for the service generation time based on the second prediction information, and instruct the terminal through control information to schedule corresponding transmission resources to transmit the service at the service generation time.

For example, if the services will be generated at moments T1, T2, and T3, the second prediction information is T1, T2, and T3. The radio access network device reserves a first transmission resource for T1, a second transmission resource for T2, and a third transmission resource for T3, and instructs the terminal through control information to schedule the first transmission resource to transmit the service at moment T1, the second transmission resource to transmit the service at moment T2, and the third transmission resource to transmit the service at moment T3.

In some embodiments, the second prediction information may include service generation time and service generation volume.

For example, if the service will be generated at moments T1, T2, and T3, and the service generation volume is V1, V2, and V3 respectively, then the second prediction information indicates that the service generation volume at moment T1 is V1, the service generation volume at moment T2 is V2, and the service generation volume at moment T3 is V3.

In one embodiment, after the radio access network device receives the second prediction information, it reserves, based on the second prediction information, transmission resources for the terminal at the corresponding service generation time based on the service generation volume. For example, the radio access network device allocates the most transmission resources for the service generation time with the largest service generation volume, and allocates the least transmission resources for the service generation time with the smallest service generation volume. Furthermore, the terminal is instructed via control information to schedule corresponding transmission resources to transmit the service at the service generation time.

In some embodiments, the second prediction information may include a probability of the service generation at the second moment. For example, if the predicted probability of the service generation at moment t1 is 20 %, the probability of the service generation at moment t2 is 30 %, and the probability of the service generation at moment t3 is 90 %, then the second prediction information indicates that the probability of the service generation at moment t1 is 20 %, the probability of the service generation at moment t2 is 30 %, and the probability of the service generation at moment t3 is 90 %.

In one embodiment, after receiving the second prediction information, the radio access network device obtains the service generation probability at the second moment based on the second prediction information. The radio access network device may then reserve more transmission resources for the second moment with the highest service generation probability, and reserve the least transmission resources for the second moment with the lowest service generation probability. Alternatively, the radio access network device preferentially configures scheduling information for the second moment with the highest service generation probability. For example, if the terminal has a higher service generation probability at moment T1, the radio access network device preferentially instructs the terminal, through control information, to schedule corresponding transmission resources for service transmission at moment T1.

In some embodiments, the second prediction information may include a third moment at which the service generation probability exceeds the first threshold. For example, if the probabilities of service generation at t1, t2, and t3 are 5%, 90%, and 75%, respectively, the second prediction information may include only the moment at which the probability exceeds 80%, for example, the second prediction information may only include t2.

In one embodiment, after the radio access network device receives the second prediction information, it obtains a third moment at which the service generation probability is greater than a first threshold, based on the second prediction information, and then the radio access network device may reserve transmission resources for the third moment. Alternatively, the radio access network device preferentially configures scheduling information for the second moment. For example, if the service generation probability of the terminal at moment T2 is greater than the first threshold, the radio access network device instructs the terminal, through control information, to schedule corresponding transmission resources to transmit the service at moment T2.

In some embodiments, the second prediction information may include a fourth moment at which the service generation volume is greater than a second threshold. For example, the service generation volumes at t1, t2, and t3 are 1, 5, and 2, respectively. In this case, the second prediction information may only include the moments where the service generation volume exceeds 3%, e.g., the second prediction information may only include t2.

In one embodiment, after a radio access network device receives the second prediction information, it obtains a fourth moment at which the service generation volume is greater than a second threshold based on the second prediction information. The radio access network device may then reserve transmission resources for the fourth moment. Alternatively, the radio access network device preferentially configures configuring scheduling information for the fourth moment. For example, if the terminal's service generation volume at moment T2 is greater than the second threshold, the radio access network device instructs the terminal, via control information, to schedule corresponding transmission resources at moment T2 to transmit the service.

In some embodiments, the second prediction information may include target parameters, where the target parameters are some parameters determined based on service characteristics of the terminal.

Of course, the second prediction information not only includes the information involved in the above exemplary embodiments, but may also include other information obtained by predicting service characteristics, which is not limited in the embodiments of the present disclosure.

In a service prediction method provided by an embodiment of the present disclosure, the target parameter includes at least one of the following:
monitoring time of the PDCCH;
a resource allocated for the PDSCH; and
one or more monitoring time under DRX.

In some embodiments, the monitoring time of the PDCCH and/or the resource allocated for the PDSCH are determined based on the service generation volume. For example, the greater the service generation volume, the longer the monitoring time of the PDCCH and the more resources allocated to the PDSCH.

In some embodiments, one or more monitoring time under DRX are determined based on the service generation time. In one embodiment, each service generation time corresponds to one monitoring time under DRX, so that the terminal can monitor whether there is service generation during the monitoring time under DRX, thereby improving monitoring efficiency.

Of course, the target parameters do not only include the parameters involved in the above exemplary embodiments, but may also include other parameters that can be determined based on the service characteristics of the terminal, which is not limited in the embodiments of the present disclosure.

In a service prediction method provided by an embodiment of the present disclosure, the first prediction information indicates that the channel state of the terminal at the first moment includes at least one of the following: the service generation time, the second moment, the third moment, and the fourth moment.

For example, if the second prediction information indicates that the service generation time is t1, then the terminal predicts the channel state at moment t1. In another example, if the second prediction information indicates the probability of service generation at a second moment, then the terminal predicts the channel state at the second moment. In yet another example, if the second prediction information indicates a third moment when the service generation probability is greater than a first threshold, then the terminal predicts the channel state at the third moment.

In the embodiment of the present disclosure, the radio access network device may receive target parameters, thereby determining parameter information such as the monitoring time of the PDCCH and the resources to be allocated for the PDSCH in advance, and then performing relevant scheduling in advance, so that the system efficiency is improved and ineffective scheduling is reduced.

Based on the same concept, an embodiment of the present disclosure further provides a service prediction method performed by a core network device.

FIG. 9 is a flow chart of a service prediction method shown according to an exemplary embodiment. As shown in FIG. 9, the service prediction method is performed by a core network device and includes the following steps.

In step S81, the core network device determines second prediction information, where the second prediction information is determined based on a service characteristic of the terminal.

Specifically, an AI model is deployed on the core network device side, and the core network device determines the second prediction information based on the prediction from the AI model.

In some embodiments, the prediction information is determined based on prediction from an AI model. The AI model is a pre-trained model of which training set may be different types of services and their corresponding historical service generation times, service generation volumes, and the like. Therefore, in the actual use process, a service type may be used as an input to the AI model, and information such as the service generation time and the service generation volume corresponding to the service type may be output. For example, if the service type is voice, information such as the service generation time and the service generation volume of the voice service may be predicted based on the AI model.

In some embodiments, the second prediction information includes at least one of the following: service generation time; service generation volume; service generation probability at the second moment; a third moment at which the service generation probability is greater than the first threshold; a fourth moment at which the service generation volume is greater than the second threshold; a target parameter.

In some embodiments, the second prediction information may include service generation time. The service generation time is the time when a service may be generated, which is predicted by the AI model, rather than the time when a service is actually generated. Similarly, all items included in the second prediction information are predicted by the AI model, rather than the service generation time or the service generation volume of the terminal in a real situation

In some embodiments, the target parameter includes at least one of the following: monitoring time of a PDCCH; a resource allocated for a PDSCH; one or more monitoring time under DRX.

In step S82, the core network device sends second prediction information to the radio access network device.

In the embodiment of the present disclosure, the core network device is able to predict the service characteristics to determine the second prediction information, and send the second prediction information to the radio access network device, so that the radio access network device can reserve resources for the terminal or perform related scheduling in advance based on the service characteristics of the terminal, thereby improving system efficiency and reducing invalid scheduling.

In a service prediction method provided by an embodiment of the present disclosure, the second prediction information includes at least one of the following:
service generation time;
service generation volume;
service generation probability at a second moment;
a third moment at which the service generation probability is greater than a first threshold;
a fourth moment at which the service generation volume is greater than a second threshold; and
a target parameter.

In some embodiments, the second prediction information may include the service generation time. After the radio access network device receives the second prediction information, it can reserve transmission resources for the service generation time based on the second prediction information, and instruct the terminal through control information to schedule corresponding transmission resources to transmit the service at the service generation time.

For example, if the services will be generated at T1, T2, and T3, the second prediction information is T1, T2, and T3. The radio access network device reserves a first transmission resource for T1, a second transmission resource for T2, and a third transmission resource for T3, and instructs the terminal through control information to schedule the first transmission resource to transmit the service at T1, the second transmission resource to transmit the service at T2, and the third transmission resource to transmit the service at T3.

In some embodiments, the second prediction information may include the service generation time and service generation volume. For example, if services are to be generated at moments T1, T2, and T3, and the service generation volumes are V1, V2, and V3, respectively, the second prediction information indicates that the service generation volume at moment T1 is V1, the service generation volume at moment T2 is V2, and the service generation volume at moment T3 is V3.

In one embodiment, after the radio access network device receives the second prediction information, the radio access network device reserves, based on the second prediction information, transmission resources for the terminal at the corresponding service generation time based on the service generation volume. For example, the radio access network device allocates the most transmission resources for the service generation time with the largest service generation volume, and allocates the least transmission resources for the service generation time with the smallest service generation volume. Furthermore, the terminal is instructed via control information to schedule corresponding transmission resources to transmit the service at the service generation time.

In some embodiments, the second prediction information may include a probability of the service generation at the second moment. For example, if the predicted probability of the service generation at moment t1 is 20 %, the probability of the service generation at moment t2 is 30 %, and the probability of the service generation at moment t3 is 90 %, then the second prediction information indicates that the probability of the service generation at moment t1 is 20 %, the probability of the service generation at moment t2 is 30 %, and the probability of the service generation at moment t3 is 90 %.

In one embodiment, after receiving the second prediction information, the radio access network device obtains the service generation probability at the second moment based on the second prediction information. The radio access network device may then reserve more transmission resources for the second moment with the highest service generation probability, and reserve the least transmission resources for the second moment with the lowest service generation probability. Alternatively, the radio access network device preferentially configures scheduling information for the second moment with the highest service generation probability. For example, if the terminal has a higher service generation probability at moment T1, the radio access network device preferentially instructs the terminal, through control information, to schedule corresponding transmission resources for service transmission at moment T1.

In some embodiments, the second prediction information may include a third moment at which the service generation probability exceeds the first threshold. For example, if the probabilities of service generation at t1, t2, and t3 are 5%, 90%, and 75%, respectively, the second prediction information may include only the moment at which the probability exceeds 80%, for example, the second prediction information may only include t2.

In one embodiment, after the radio access network device receives the second prediction information, it obtains a third moment at which the service generation probability is greater than a first threshold, based on the second prediction information, and then the radio access network device may reserve transmission resources for the third moment. Alternatively, the radio access network device preferentially configures scheduling information for the second moment. For example, if the service generation probability of the terminal at moment T2 is greater than the first threshold, the radio access network device instructs the terminal, through control information, to schedule corresponding transmission resources to transmit the service at moment T2.

In some embodiments, the second prediction information may include a fourth moment at which the service generation volume is greater than a second threshold. For example, the service generation volumes at t1, t2, and t3 are 1, 5, and 2, respectively. In this case, the second prediction information may only include the moments where the service generation volume exceeds 3%, e.g., the second prediction information may only include t2.

In one embodiment, after a radio access network device receives the second prediction information, it obtains a fourth moment at which the service generation volume is greater than a second threshold based on the second prediction information. The radio access network device may then reserve transmission resources for the fourth moment. Alternatively, the radio access network device preferentially configures configuring scheduling information for the fourth moment. For example, if the terminal's service generation volume at moment T2 is greater than the second threshold, the radio access network device instructs the terminal, via control information, to schedule corresponding transmission resources at moment T2 to transmit the service.

In some embodiments, the second prediction information may include target parameters, where the target parameters are some parameters determined based on service characteristics of the terminal.

Of course, the second prediction information not only includes the information involved in the above exemplary embodiments, but may also include other information obtained by predicting service characteristics, which is not limited in the embodiments of the present disclosure.

In a service prediction method provided by an embodiment of the present disclosure, the target parameter includes at least one of the following:
monitoring time for the PDCCH;
a resource allocated for the PDSCH; and
one or more monitoring time under the DRX.

In some embodiments, the monitoring time for the PDCCH and/or the resource allocated for the PDSCH are determined based on the service generation volume. For example, the greater the service generation volume, the longer the monitoring time for the PDCCH and the more resources allocated for the PDSCH.

In some embodiments, one or more monitoring time under DRX are determined based on the service generation time. In one embodiment, each service generation time corresponds to one monitoring time under DRX, so that the terminal can monitor whether there is service generation during the monitoring time under DRX, thereby improving monitoring efficiency.

Of course, the target parameters do not only include the parameters involved in the above exemplary embodiments, but may also include other parameters that can be determined based on the service characteristics of the terminal, which is not limited in the embodiments of the present disclosure.

In the embodiment of the present disclosure, the radio access network device may receive target parameters, thereby determining parameter information such as the monitoring time of the PDCCH and the resource allocated for the PDSCH in advance, and then performing relevant scheduling in advance, thereby improving system efficiency and reducing ineffective scheduling.

Hereinafter, a service prediction method provided in an embodiment of the present disclosure is described in the form of a wireless communication system.

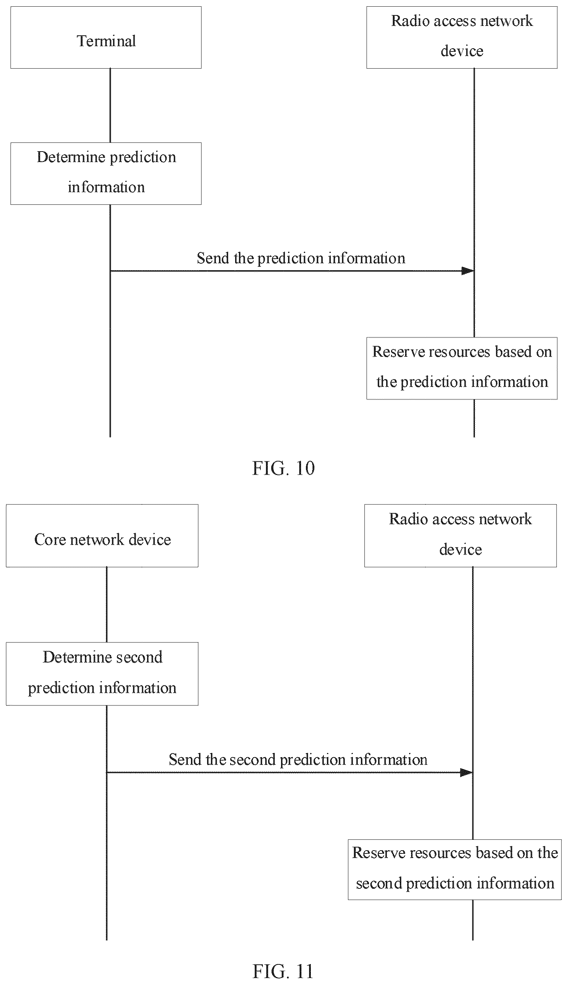

In some embodiments, as shown in FIG. 10, the terminal predicts the service characteristics based on the AI model to determine the second prediction information, and predicts the channel state to determine the first prediction information, and sends the first prediction information and the second prediction information to the radio access network device. The radio access network device reserves resources based on the first prediction information and the second prediction information.

In some embodiments, as shown in FIG. 11, the core network device predicts the service characteristics based on the AI model to determine second prediction information, and sends the second prediction information to the radio access network device, and the radio access network device reserves resources based on the second prediction information.

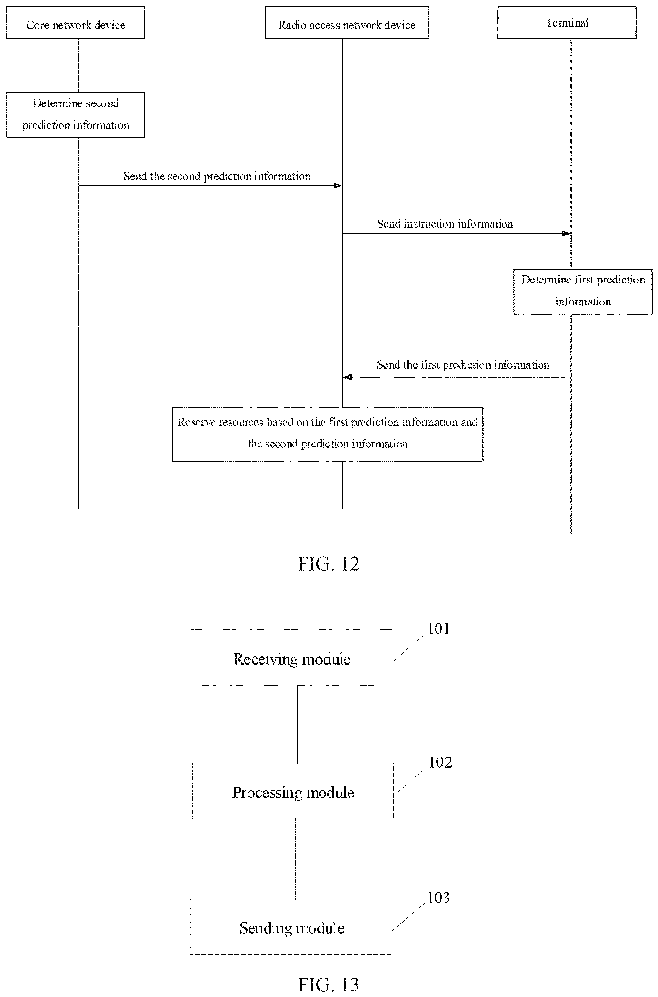

In some embodiments, as shown in FIG. 12, the core network device predicts the service characteristics based on the AI model to determine second prediction information, and sends the second prediction information to the radio access network device. The radio access network device sends indication information to the terminal based on the second prediction information. The terminal predicts the channel state based on the indication information, determines first prediction information, and sends the first prediction information to the radio access network device. The radio access network device reserves resources based on the first prediction information and the second prediction information.

It should be noted that those skilled in the art may appreciate that the various implementation methods/embodiments involved in the embodiments of the present disclosure can be used in conjunction with the aforementioned embodiments or can be used independently. Whether used alone or in conjunction with the aforementioned embodiments, the implementation principles are similar. In the implementation of the present disclosure, some embodiments are described in terms of implementation methods used together. Of course, those skilled in the art will appreciate that such examples are not limitations on the embodiments of the present disclosure.

Based on the same concept, an embodiment of the present disclosure further provides a service prediction apparatus.

It is understandable that the service prediction apparatus provided by the embodiment of the present disclosure includes hardware structures and/ or software modules corresponding to the execution of each function in order to realize the above functions. In combination with the units and algorithm steps of each example disclosed in the embodiment of the present disclosure, the embodiment of the present disclosure can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to exceed the scope of the technical solution of the embodiment of the present disclosure.

FIG. 13 is a block diagram of a service prediction apparatus according to an exemplary embodiment. Referring to FIG. 13, the apparatus includes a receiving module 101.

The receiving module 101 is configured to receive prediction information, which includes at least one of first prediction information and second prediction information; where the first prediction information is used to indicate a channel state of a terminal at a first moment, and the second prediction information is determined based on a service characteristic of the terminal.

In one embodiment, the receiving module 101 is configured to receive first prediction information and/or second prediction information sent by the terminal.

In one embodiment, the receiving module 101 is configured to receive second prediction information sent by a core network device.

In one embodiment, the receiving module 101 is configured to receive second prediction information sent by the core network device; and receive first prediction information sent by the terminal.

In one embodiment, the apparatus further includes a processing module 102 and a sending module 103. The processing module 102 is configured to determine the first moment based on the second prediction information;

The sending module 103 is configured to send indication information to the terminal, where the indication information is used to indicate the terminal to predict the channel state at the first moment.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one embodiment, the first moment includes at least one of the following: the service generation time, the second moment, the third moment, and the fourth moment.

In one embodiment, the first prediction information is determined by the terminal through prediction based on an AI model; and/or the second prediction information is determined by the terminal or a core network device through prediction based on an AI model.

In one embodiment, the processing module 102 is configured to reserve resources for the terminal based on the first prediction information and/or the second prediction information.

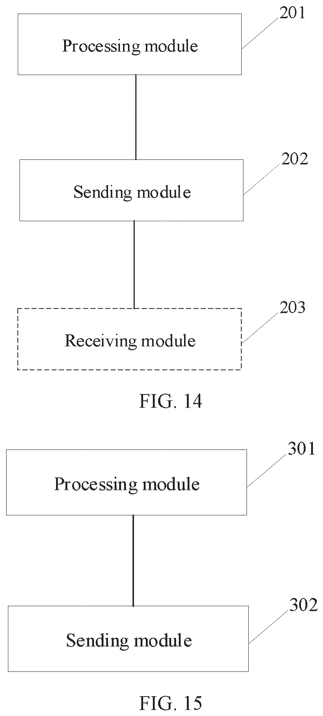

FIG. 14 is a block diagram of a service prediction apparatus shown according to an exemplary embodiment. Referring to FIG. 14, the apparatus includes a processing module 201 and a sending module 202.

A processing module 201 is configured to determine prediction information, where the prediction information includes at least one of first prediction information and second prediction information; where the first prediction information is used to indicate a channel state of a terminal at a first moment, and the second prediction information is determined based on a service characteristic of the terminal.

The sending module 202 is configured to send prediction information to a radio access network device.

In one embodiment, the apparatus further includes a receiving module 203. The receiving module 203 is configured to receive indication information sent by the radio access network device, where the indication information is used to indicate the terminal to predict the channel state at the first moment;

The processing module 201 is configured to determine second prediction information based on the indication information.

In one embodiment, the processing module 201 is configured to determine second prediction information, where the second prediction information is determined based on the service characteristic of the terminal.

The sending module 202 is configured to send second prediction information to a radio access network device.

In one embodiment, the second prediction information includes at least one of the following:
service generation time;
service generation volume;
service generation probability at a second moment;
a third moment at which service generation probability is greater than a first threshold;
a fourth moment at which service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one implementation, the first moment includes at least one of the following: the service generation time, the second moment, the third moment, and the fourth moment.

In one embodiment, an AI model is deployed in the terminal, and the first prediction information and the second prediction information are determined through prediction based on the AI model.

FIG. 15 is a block diagram of a service prediction apparatus according to an exemplary embodiment. Referring to FIG. 15, the apparatus includes a processing module 301 and a sending module 302.

The processing module 301 is configured to determine second prediction information, where the second prediction information is determined based on a service characteristic of a terminal.

The sending module 302 is configured to send second prediction information to a radio access network device.

In one embodiment, the second prediction information includes at least one of the following:
service generation time;
service generation volume;
service generation probability at a second moment;
a third moment at which the service generation probability is greater than a first threshold;
a fourth moment at which the service generation volume is greater than a second threshold; and
a target parameter.

In one embodiment, the target parameter includes at least one of the following:
monitoring time for a physical downlink control channel (PDCCH);
a resource allocated for a physical downlink shared channel (PDSCH); and
one or more monitoring time in discontinuous reception (DRX).

In one embodiment, an AI model is deployed in the core network device, and the second prediction information is determined through prediction based on the AI model.

Regarding the apparatus in the above embodiments, the specific manners in which each module performs operations have been described in detail in the embodiments related to the method, and will not be elaborated herein.

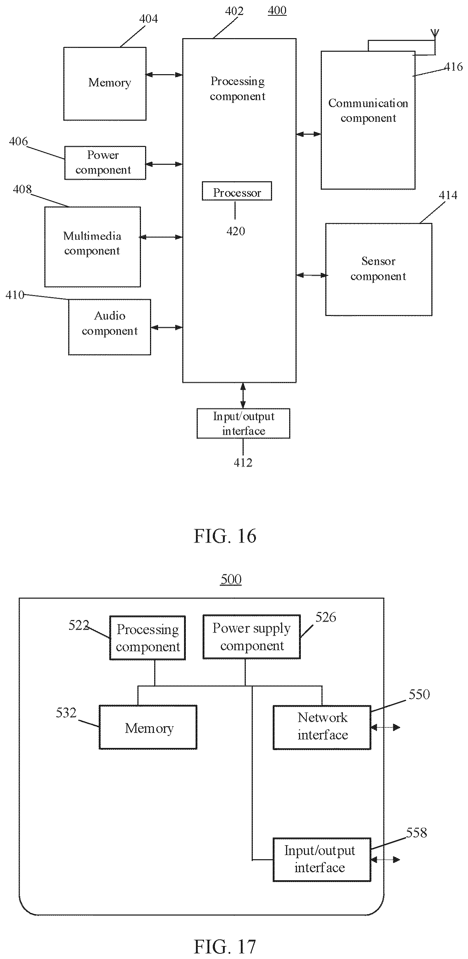

FIG. 16 is a block diagram of an apparatus 400 for service prediction shown according to an exemplary embodiment. For example, the apparatus 400 may be a mobile phone, a computer, a digital broadcasting terminal, a message receiving and transmitting device, a game console, a tablet device, a medical device, a fitness device, or a personal digital assistant, etc.

Referring to FIG. 16, the apparatus 400 may include one or more of the following components: a processing component 402, a memory 404, a power component 406, a multimedia component 408, an audio component 410, an input/ output (I/O) interface 412, a sensor component 414, and a communication component 416.

The processing component 402 typically controls overall operation of the apparatus 400, such as the operations associated with display, telephone calls, data communications, camera operations, and recording operations. The processing component 402 may include one or more processors 420 to execute instructions to complete all or part of the steps of the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the apparatus 400. Examples of such data include instructions for any applications or methods operated on the apparatus 400, contact data, phonebook data, messages, pictures, videos, etc. The memory 404 may be implemented using any type of volatile or non-volatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power sources, and any other components associated with the generation, management, and distribution of power in the apparatus 400.

The multimedia component 408 includes a screen providing an output interface between the apparatus 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 408 includes a front camera and/or a rear camera. The front camera and/or the rear camera may receive external multimedia data while the apparatus 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the apparatus 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide state assessments of various aspects of the apparatus 400. For instance, the sensor component 414 may detect an open/closed state of the apparatus 400, relative positioning of components, e.g., the display and the keypad of the apparatus 400, a change in position of the apparatus 400 or a component of the apparatus 400, a presence or absence of user contact with the apparatus 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication, wired or wirelessly, between the apparatus 400 and other devices. The apparatus 400 can access a wireless network based on a communication standard, such as WiFi, 2G or 3G, or a combination thereof. In an exemplary embodiment, the communication component 416 receives a broadcast signal or broadcast associated information from an external broadcast management system via a broadcast channel. In an exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as the memory 404 including instructions, executable by the processor 420 in the apparatus 400, for completing the above methods. For example, the non-transitory computer-readable storage medium may be a ROM, a random access memory (RAM), a CD-ROM, a magnetic tape, a floppy disc, an optical data storage device, and the like.

FIG. 17 is a block diagram of an apparatus 500 for service prediction, according to an exemplary embodiment. For example, apparatus 500 may be provided as a server. Referring to FIG. 17, the apparatus 500 includes a processing component 522, which further includes one or more processors, and a memory resource represented by a memory 532 for storing an instruction executable by processing component 522, such as an application program. The application program stored in memory 532 may include one or more modules, each corresponding to a set of instructions. Furthermore, the processing component 522 is configured to execute instructions to perform the above-described service prediction method.

The apparatus 500 may further include a power supply component 526 configured to perform power management of the apparatus 500, a wired or wireless network interface 550 configured to connect the apparatus 500 to a network, and an input/output (I/O) interface 558. The apparatus 500 may operate based on an operating system stored in the memory 532, such as a Windows Server^{™}, a Mac OS X^{™}, a Unix^{™}, a Linux^{™}, a FreeBSD^{™}, or the like.

It may be further understood that, in the present disclosure, "a plurality of" means two or more than two, and other quantifiers are similar thereto. "And/or" describes the association relationship of associated objects, which indicates that three relationships may exist. For example, A and/or B may represent: A exists alone, A and B exist at the same time, and B exists alone. The character "/" generally indicates that the associated objects before and after are in an "or" relationship. The singular forms of "a", "the" and "said" are also intended to include the plural forms, unless otherwise clearly indicated by the context.

It can be further understood that the meanings of the terms such as "in response to" and "if" involved in the present disclosure depend on the context and the actual usage scenarios. For example, the term "in response to" used herein may be interpreted as "at the time of" or "when..." or "if" or "upon".

It may be further understood that the terms "first", "second", etc. are used to describe various information, but such information should not be limited to these terms. These terms are only used to distinguish information of the same type from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It can be further understood that, although the operations are described in a specific order in the drawings in the embodiments of the present disclosure, it should not be construed as requiring the operations to be performed in the specific order shown or in a sequential order, nor as requiring the execution of all the operations shown to obtain the desired result. In certain environments, multitasking and parallel processing may be advantageous.

Those skilled in the art will readily appreciate other implementation solutions of the present disclosure after considering the specification and practicing the disclosure disclosed herein. The present disclosure is intended to cover any variations, uses or adaptations of the present disclosure that follow the general principles of the present disclosure and include common knowledge or customary technical means in the art that are not disclosed in the present disclosure.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A service prediction method, performed by a radio access network device, comprising:
receiving prediction information, wherein the prediction information comprises at least one of first prediction information and second prediction information; wherein the first prediction information is used to indicate a channel state of a terminal at a first moment, and the second prediction information is determined based on a service characteristic of the terminal.

2. The method according to claim **1,** wherein receiving the prediction information comprises:
receiving the first prediction information and/or the second prediction information sent by the terminal.

3. The method according to claim 1, wherein receiving the prediction information comprises:
receiving the second prediction information sent by a core network device.

4. The method according to claim 1**,** wherein receiving the prediction information comprises:
receiving the second prediction information sent by a core network device; and
receiving the first prediction information sent by the terminal.

5. The method according to claim 4, wherein before receiving the first prediction information sent by the terminal, the method further comprises:
determining the first moment based on the second prediction information; and
sending indication information to the terminal, wherein the indication information is used to indicate the terminal to predict the channel state at the first moment.

6. The method according to any one of claims 1 to 5, wherein the second prediction information comprises at least one of following:
service generation time;
service generation volume;
service generation probability at a second moment;
a third moment at which service generation probability is greater than a first threshold;
a fourth moment at which service generation volume is greater than a second threshold; and
a target parameter.

7. The method according to claim 6, wherein the target parameter comprises at least one of following:
monitoring time for a physical downlink control channel (PDCCH);
a resource allocated for a physical downlink shared channel (PDSCH); and
one or more monitoring time in discontinuous reception (DRX).

8. The method according to claim 6, wherein the first moment comprises at least one of following: the service generation time, the second moment, the third moment, and the fourth moment.

9. The method according to any one of claims 1 to 8, wherein the first prediction information is determined by the terminal through prediction based on an AI model; and/or
the second prediction information is determined by the terminal or a core network device through prediction based on an AI model.

10. The method according to any one of claims 1 to 9, further comprising:
reserving a resource for the terminal based on the first prediction information and/or the second prediction information.

11. A service prediction method, performed by a terminal, comprising:
determining prediction information, wherein the prediction information comprises at least one of first prediction information and second prediction information; wherein the first prediction information is used to indicate a channel state of the terminal at a first moment, and the second prediction information is determined based on a service characteristic of the terminal; and
sending the prediction information to a radio access network device.

12. The method according to claim 11, wherein the prediction information comprises the second prediction information, and determining the prediction information comprises:
receiving indication information sent by the radio access network device, wherein the indication information is used to indicate the terminal to predict the channel state at the first moment; and
determining the prediction information based on the indication information.

13. The method according to claim 11 or 12, wherein the second prediction information comprises at least one of following:
service generation time;
service generation volume;
service generation probability at a second moment;
a third moment at which service generation probability is greater than a first threshold;
a fourth moment at which service generation volume is greater than a second threshold; and
a target parameter.

14. The method according to claim 13, wherein the target parameter comprises at least one of following:
monitoring time for a physical downlink control channel (PDCCH);
a resource allocated for a physical downlink shared channel (PDSCH); and
one or more monitoring time in discontinuous reception (DRX).

15. The method according to claim 13, wherein the first moment comprises at least one of following: the service generation time, the second moment, the third moment, and the fourth moment.

16. The method according to any one of claims 13 to 15, wherein an AI model is deployed in the terminal, and the first prediction information and the second prediction information are determined through prediction based on the AI model.

17. A service prediction method, performed by a core network device, comprising:
determining second prediction information, wherein the second prediction information is determined based on a service characteristic of a terminal; and
sending the second prediction information to a radio access network device.

18. The method according to claim 17, wherein the second prediction information comprises at least one of following:
service generation time;
service generation volume;
service generation probability at a second moment;
a third moment at which service generation probability is greater than a first threshold;
a fourth moment at which service generation volume is greater than a second threshold;
and
a target parameter.

19. The method according to claim 18, wherein the target parameter comprises at least one of following:
monitoring time for a physical downlink control channel (PDCCH);
a resource allocated for a physical downlink shared channel (PDSCH); and
one or more monitoring time in discontinuous reception (DRX).

20. The method according to any one of claims 17 to 19, wherein an AI model is deployed in the core network device, and the second prediction information is determined through prediction based on the AI model.

21. A service prediction apparatus, comprising:
a receiving module, configured to receive prediction information, wherein the prediction information comprises at least one of first prediction information and second prediction information; wherein the first prediction information is used to indicate a channel state of a terminal at a first moment, and the second prediction information is determined based on a service characteristic of the terminal.

22. A service prediction apparatus, comprising:
a processing module, configured to determine prediction information, wherein the prediction information comprising at least one of first prediction information and second prediction information; wherein the first prediction information is used to indicate a channel state of a terminal at a first moment, and the second prediction information is determined based on a service characteristic of the terminal; and
a sending module, configured to send the prediction information to a radio access network device.

23. A service prediction apparatus, comprising:
a processing module, configured to determine second prediction information, wherein the second prediction information is determined based on a service characteristic of a terminal; and
a sending module, configured to send the second prediction information to a radio access network device.

24. A service prediction apparatus, comprising:
a processor; and
a memory, configured to store processor-executable instructions;
wherein the processor is configured to perform the service prediction method according to any one of claims 1 to 10.

25. A service prediction apparatus, comprising:
a processor; and
a memory, configured to store processor-executable instructions;
wherein the processor is configured to perform the service prediction method according to any one of claims 11 to 16.

26. A service prediction apparatus, comprising:
a processor; and
a memory, configured to store processor-executable instructions;
wherein the processor is configured to perform the service prediction method according to any one of claims 17 to 20.

27. A storage medium, wherein instructions are stored in the storage medium, and the instructions in the storage medium, when executed by a processor of a radio access network device, enables the radio access network device to execute the service prediction method according to any one of claims 1 to 10.

28. A storage medium, wherein instructions are stored in the storage medium, and the instructions in the storage medium, when executed by a processor of a terminal, enables the terminal execute the service prediction method according to any one of claims 11 to 16.

29. A storage medium, wherein instructions are stored in the storage medium, and the instructions in the storage medium, when executed by a processor of a core network device, enables the core network device to execute the service prediction method according to any one of claims 17 to 20.
